# EUROPEAN PATENT SPECIFICATION

(11) **EP 4 562 312 B1**
(45) Date of publication and mention of the grant of the patent: **02.09.2026**
(21) Application number: 23748255.9
(22) Date of filing: 25.07.2023
(51) Int. Cl.: F16B 31/02, F16B 37/00

(54) **PRELOAD VERIFICATION FOR CRITICAL FASTENERS**
VORSPANNUNGSÜBERPRÜFUNG FÜR KRITISCHE BEFESTIGUNGSELEMENTE
VÉRIFICATION DE PRÉCHARGE POUR ÉLÉMENTS DE FIXATION CRITIQUES

(30) Priority: 25.07.2022 GB 202210852
(43) Date of publication of application: 04.06.2025
(73) Proprietor: Würth Industrie Service GmbH & Co.KG, 97980 Bad Mergentheim (DE)
(72) Inventor: HIRST, John Andrew Brian, Bath Avon BA1 6HB (GB)
(74) Representative: Dilg, Haeusler, Schindelmann Patentanwaltsgesellschaft mbH
(86) International application number: PCT/EP2023/070593
(87) International publication number: WO 2024/023096

(56) References cited:
- WO-A1-2019/077314
- WO-A1-2020/193956
- US-A1- 2013 186 951

## Description

### FIELD OF THE INVENTION

The present invention relates to a female fastener, to an arrangement, and to a method of use.

### BACKGROUND OF THE INVENTION

Tightening of a threaded fastener to a preload lower than it experiences in operation can quickly lead to its fatigue failure or fluid leakage from pressure joints. It is therefore of great importance that fasteners are tightened to a safe preload, that is a preload in excess of any loads that will be experienced in operation. It is also important that after assembly any relaxation in a joint does not cause the preload to fall below the aforementioned safe minimum preload.

Tightening fasteners is generally performed using torque wrenches or hydraulic tensioners. Both methods are well are known in the industry to provide poor control of preload. In the case of torque wrenches the thread friction is an unknown factor and it directly affects the final bolt tension. In the case of hydraulic tensioners final fastener load is unsure because the load transfer loss between the tensioner tool and the bolt can only be an estimate. Neither method provides any way of checking bolt load after assembly.

WO 2014/106752 A2 uses a gauge pin fitted into the side of the nut and orthogonal to the threaded bore of the nut. This orthogonal design would necessarily introduce several measurement errors. The diameter of the orthogonal hole limits the amount of strain available to be measured. The delicate 90 degree linkage mechanism needed to operate the gauge rod introduces backlash errors. Operability is a problem as sliding a tightening socket or wrench over the nut could easily damage the gauge mechanism fitted in the side of the nut.

US 2830486 shows a nut with an elongated indicator pin fixed at one end and freely slidable at its other end within a bore where a set level of compression of the nut relative to the pin moves the pin end from a first state to a second state. The two states are differentiated by a visual check of the position of the pin end relative to the top of the nut. The load bearing capacity of this nut is low, severely limited by the necessary internal slots.

GB2112725.3 shows a nut with an elongated indicator pin fixed at one end and freely slidable at its other end within a bore where a set level of compression of the nut relative to the pin moves the pin end from a first state to a second state. The two states are differentiated by a fingertip check of whether a rotor is free to turn. This is a mechanism operated by finger pressure so does not link with other nuts or control tightening devices.

WO 2019/077314 A1 shows a load indicating fastener.

### SUMMARY OF THE INVENTION

It is an object of the invention to provide a reliable fastener ensuring a safe joint.

In order to achieve the object defined above, a female fastener, an arrangement and a method of use according to the independent claims are provided. Further embodiments are provided by the dependent claims.

According to an exemplary embodiment of the invention, a female fastener is provided for receiving and engaging with a threaded male fastener, wherein the female fastener comprises a threaded body, a load measuring device having an electrical switch mechanism (for instance a two-state (such as on or off) electrical switch mechanism) disposed completely sealed and contained inside the threaded body for measuring compressive load on the female fastener and for communicating a signal (which may be for example an electrical signal or an electrically detectable signal) representing said measured compressive load to an external system.

According to another exemplary embodiment of the invention, an arrangement is provided which comprises a female fastener with the above-mentioned features, and the external system receiving said signal when being coupled with the female fastener.

According to still another exemplary embodiment of the invention, a female fastener having the above-mentioned features or an arrangement having the above-mentioned features is used in a wind turbine, for example in an offshore wind turbine.

Thus, a female fastener for receiving and engaging with a threaded male fastener may be provided which comprises a force sensor means disposed completely sealed and contained inside the body of said fastener for sensing compressive force on the female fastener and for outputting a signal representing said compressive force to an external data collection device.

Embodiments of the present invention seek to mitigate the above problems by providing a reliable means of measuring the compressive load in a nut and referencing it to a preset safe minimum load. It makes possible the interconnection of large groups of nuts and the transmission of their preload condition for remote monitoring. It may thus be detected at an early stage when after assembly a relaxation in a joint causes the preload to fall below a safe minimum preload, so that countermeasures may be taken in due time. It may also be detected during assembly that a joint does not yet provide sufficient preload, so that the assembly process can be continued until sufficient strength of the joint can be ensured.

Exemplary embodiments may provide a female, threaded, load indicating nut for engaging with a threaded male fastener.

Exemplary embodiments of the present invention concern a female, threaded nut fastener which is able to measure its own preload and can use the measurement to control its own tightening process and can communicate that preload measurement to a remote monitoring station.

Exemplary embodiments of the invention relate to a threaded nut with its own built in load measuring device. This can accurately measure and indicate preload. It can control whatever tightening system is being used, for example wrench or tensioner. It can indicate when its own preload falls below a preset safe minimum load using simple hand held tools. It can easily be linked to other nuts in a surrounding group, such as the large groups of nuts found in wind turbines, and transmit the condition of all of the group to a remote monitoring station via a single transmitter.

The load measuring mechanism may be set deep in the inside of the nut body where it can avoid physical and environmental damage. This is an advantageous feature enabling fasteners to work in challenging environments yet be totally reliable.

When a female fastener is connected with a corresponding male fastener, in particular by screwing the male fastener with external thread into an interior hole of the female fastener with internal thread (which may lead to the male fastener pressing onto the internal threads of the female fastener), compressive load may be exerted to the female fastener, whereas tensile load may be exerted to the male fastener. A too small compressive load (for example during an assembly process) or an excessive reduction of the compressive load (for example over time due to loosening forces) in the female fastener may be an indication for a loose and therefore unsafe nut, which may cause a reliability issue. Such an unintentional condition of a female fastener and a joint as a whole may be detected precisely and early according to exemplary embodiments of the invention, so that measures for increasing the connection strength may be taken to remedy the reliability issue.

For instance, the female fastener or the arrangement may be used in a wind turbine for identifying loose or unsafe nuts. Female fasteners of a wind turbine, for instance connected at a blade of a wind turbine, may be difficult to reach or access. With exemplary embodiments, corresponding signals indicating a loose or unsafe nut may be transmitted reliably and automatically without the need to send an engineer to a mounting position of a nut, which may be difficult to reach.

Although a wind turbine may be a preferred field of application of exemplary embodiments of the invention, the female fastener or the arrangement may also be used for other purposes, for example in a petrochemical plant (for instance for preventing leakage caused by loose nuts).

In the following, further exemplary embodiments of the female fastener, the arrangement and the method of use will be explained.

In an embodiment, the load measuring device comprises an electrical switch which is configured to change its switching condition when the measured compressive load falls below a preset minimum compressive load level. In particular, the female fastener may comprise a single electrical switch which is caused to operate when the compressive load falls below a preset minimum level. For instance, an electric contact of the electrical switch may be closed in the event of compliance with the preset minimum compressive load level, whereas the electric contact of the electrical switch may be opened in the event of non-compliance with the preset minimum compressive load level. Detecting an electrical signal at the electrical switch may thus allow detection of the compressive load level.

For example, the switch may be embodied as an on-off switch switching between two switching conditions (i.e. on and off). A corresponding electrical signal may be an analog signal or a digital signal. A digital signal (for example having two different voltage levels) may allow a highly accurate signal transfer.

In an embodiment, the load measuring device comprises at least two electrical switches configured to change their switching conditions at different preset compressive load levels. Thus, the female fastener may comprise two or more electrical switches which are preset to switch at different compressive loads. Providing two or more switches may allow to refine the compressive load detection functionality of the load measuring device, since at least two different compressive load levels may be detected.

In an embodiment, the female fastener comprises an internal sealed chamber containing the load measuring device and containing a fluid, in particular a liquid, configured to protect said load measuring device from environmental damage, in particular from corrosion and/or vibration. Hence, the female fastener may contain an internal sealed chamber containing one or more load sensing devices which contains a fluid (for example oil) to protect said sensing devices from environmental damage. This may allow to implement the female fastener even under harsh conditions, such as a corrosive environment and/or an environment exerting vibrations to the female fastener

In an embodiment, the female fastener comprises a linking unit for communicatively linking, in particular for wired or wireless linking, the female fastener with at least one further female fastener. For example, the linking unit may comprise a cable or a set of cables electrically connecting plural female fasteners with each other. Thus, the female fastener may include a means for linking by wire or wifi devices to other similar or identical fasteners. By coupling a plurality of female fasteners with a linking unit, signals indicative of compressive load exerted to each individual female fastener may be combined and may be sent as an overall signal via a transmitter to an external system. For example, one common signal may include compressive load information of a plurality of female fasteners connected by one or more linking units.

In an embodiment, the female fastener is configured as a nut. Other configurations of the female fastener may however be possible as well. When the female fastener is embodied as a nut, a hole may be formed in a flange surface of the nut, and a switch-rod-pair be inserted in the hole. A lateral surface of the nut may then remain intact and closed and does not have to be provided with a hole for inserting constituents of the load measuring device therein. This may maintain mechanical integrity of the nut and may thereby strengthen a nut-bolt-joint.

In an embodiment, the female fastener is configured waterproof, in particular configured for subsea operation. When made waterproof (in particular by a correspondingly sealing and by manufacturing the female fastener of non-corrosive materials), the female fastener may be used under conditions where it is exposed to water (as for instance rain in an outdoor application or seawater in an offshore wind power application). For subsea operation, the female fastener may also be formed pressure resistant at least up to an application-dependent subsea pressure (for example at least up to 100 bar).

In an embodiment, the female fastener is configured to indicate by said signal when its own preload falls below a preset safe minimum load. A corresponding switch of the female fastener may be configured so that the switching state changes between a closed state (which may be a low-ohmic state) and an open state (which may be a high-ohmic state) at a predefined safe minimum load exerted to the female fastener.

In an embodiment, the load measuring device comprises at least one switch which is triggered to change its switching condition when the compressive load on the female fastener compresses the female fastener sufficiently to move the switch to contact a rod in the threaded body, which rod is set at a preset distance from the switch in the absence of compressive load. In the event of sufficient compressive load acting on the female fastener, the switch is moved to physically contact the rod, thereby establishing an electrically conductive connection in between. In the event of no or insufficient compressive load acting on the female fastener, the switch remains spaced with respect to the rod without direct physical contact in between, thereby disabling an electrically conductive connection in between. These two different switch states may be detected in form of an electric signal of the switch-rod-pair which indicates a low ohmic state in the presence of a direct physical contact between switch and rod or a high ohmic state in the absence of a direct physical contact between switch and rod. Measurement of an electric signal created by and detected at the load measuring device by an external system may therefore allow to reliably detect the compressive load state of the female fastener. Said signal representing said measured compressive load may be generated based on an electric response of the switch-rod-pair in response to the application of an electric stimulus signal by the external system to the switch-rod-pair.

In an embodiment, the female fastener comprises a socket for inserting a probe of the external system, wherein said inserting triggers communication of said signal representing said measured compressive load to said external system. The socket may be a recess and the probe may be a protrusion. The socket and the probe may be adapted to match with each other (for instance with a form closure). When inserting the probe in the socket and applying an electric stimulus signal by the probe to the switch transmitted via the socket, an electric response signal may be detected at the load measuring device which is indicative of the compressive load exerted to the female fastener.

In an embodiment, the female fastener is free of an energy supply unit, in particular is free of a battery. However, the external system may comprise an energy supply unit (in particular a battery) configured for powering the load measuring device when coupled with the external system. The female fastener may be powered with electric energy provided by a connected external device. For instance, when a hand held tool of the external system is connected to the female fastener for readout of an electric signal at the switch-rod-pair, formation of a mechanical connection between a socket of the female fastener and a probe of the exterior system may also connect the female fastener with an energy supply unit (such as a battery) of the external system to thereby power the female fastener during a signal readout process.

In an embodiment, the external system comprises a tightening tool, in particular a torque wrench, configured to compare the communicated signal representing said measured compressive load to torque being applied by the tightening tool to the female fastener to achieve that compressive load, and to adjust the applied torque based on a result of said comparing. Thus, the female fastener may comprise a means of signalling its compressive load condition to a torque wrench, so enabling the torque wrench to compare the achieved compressive load in the fastener to the torque being applied to the fastener to achieve that compressive load. It may then be possible to adjust automatically the applied torque accordingly to achieve a required final load. Hence, operation of the tightening tool may be rendered more reliable, since it can make sure that a correct amount of torque is applied to a female fastener-male fastener-arrangement to ensure a sufficiently strong joint in between.

In an embodiment, the external system comprises a tightening tool, in particular a hydraulic tensioner, applying said compressive load and being configured so that, if the compressive load communicated to the tightening tool by the signal deviates from a target load level, the tightening tool adjusts the applied compressive load towards the target load level. In such an embodiment, the female fastener may comprise a means of signalling its compressive load condition to a hydraulic tensioner being used to apply the load. If the compressive load signaled by the fastener is not as required, the hydraulic tensioner may be adjusted automatically or manually to achieve the required load.

In an embodiment, the external system comprises a hand held tool being manually connectable to the load measuring device for obtaining, in particular displaying (for instance visually or acoustically), information indicative of the measured compressive load. The female fastener may thus be equipped with a means of checking whether its compressive load is correct by the use of a simple hand held tool.

In an embodiment, the hand held tool is configured for subsea operation. In such an embodiment, the female fastener, which may then also be installed subsea, may comprise a means of checking whether a safe preload is present in the fastener, for example by a diver using a simple hand held tester.

In an embodiment, the external system comprises a remote monitoring station configured for analyzing the communicated signal representing said measured compressive load and for taking an action, in particular outputting a warning of loss of preload, when the measured compressive load falls below a preset minimum compressive load level. A corresponding female fastener may comprise an internal force sensor which can be linked to other similar fasteners and one or more data gathering networks. It may then be possible to execute a check of the fasteners remotely. For example, a further detailed analysis of the data may provide an early warning of loss of preload of the joint for any reason including incipient cracking of the mating male fastener.

In an embodiment, at least part of the external system is located at a remote position in relation to the female fastener. For instance, the female fastener may be located and mounted at a technical apparatus (such as a wind turbine), whereas at least part of the external system may be arranged apart from said technical device at a control site (for instance in a control room for controlling a wind turbine). Thus, it may be possible to monitor one or a plurality of female fasteners from a remote position, which is of utmost advantage when the female fasteners are located at a position where they are difficult to reach (for instance installed on a wind turbine).

In an embodiment, the arrangement comprises at least one further female fastener having the above-mentioned features, wherein said female fastener and said at least one further female fastener are linked for communicating a signal representing said measured compressive load of said female fastener and said at least one further female fastener to the external system. Such a link may be established by a linking unit, which may create a physical (preferably electrically conductive) connection or a wireless communication connection (for instance by a Bluetooth or wifi link) between the various female fasteners. Consequently, the individual signals from the female fasteners may be bundled and may be sent as a common signal from the female fasteners and the linking unit to an external system, for instance comprising a wireless transmitter.

In an embodiment, said load measuring device comprises an electrical switch which is configured to complete a circuit between, on the one hand, a probe of the external system when inserted into a socket on the female fastener and, on the other hand, a further contact of the female fastener. The electrical switch may comprise two electrically conductive parts (such as a movable switch body and a stationary part such as a rod) which may be electrically coupled with each other or decoupled from each other depending on whether the measured compressive load of the female fastener is above or below a predefined threshold value. Thus, an electromechanical compressive load detection may be enabled which can be read out by an external system by detecting an electrical signal directly at the electrical switch.

In an embodiment, the external system comprises an indicator indicating a predefined condition of the measured compressive load, in particular a light-emitting diode (LED) lighting up when a switch of the load measuring device changes a switching condition. In another embodiment, the external system comprises a flashing warning light module to be inserted into a socket of the female fastener configured to flash while the female fastener is at a safe load as indicated by said signal. Such an external system may be attached, permanently or temporarily, to a female fastener for visually indicating a critical load state.

In an embodiment, the external system comprises a wireless transmitter (for example a wifi transmitter and/or a Bluetooth transmitter) to be inserted into a socket of the female fastener and configured to wirelessly signal a switching condition of a switch of the load measuring device (for example to a remote monitoring station). Such a wireless transmission system allows to monitor the compressive load conditions of one or more female fasteners from a remote position. This is advantageous in particular when female fasteners are mounted at a position where they cannot be reached easily.

Uniquely, an exemplary embodiment may have an electrical switch mechanism set deep within the body of the nut that constantly, repeatedly and/or occasionally measures the compressive load in the nut and checks it has not fallen below a preset, safe minimum. This electrical mechanism can signal a range of actions relating to the nut. Firstly during the initial tightening operation it can automatically adjust a torque wrench to compensate for variation of thread friction. It can also signal a hydraulic tensioner to adjust the hydraulic pressure to compensate for errors in final tension. Then during working operation of a joint, it may be possible to transmit data on nut preload condition to a remote site for monitoring and analysis so ensuring the nut load does not fall below a safe minimum.

It is also possible for an on-site inspector to easily check nut load using a simple hand held test unit. A subsea version of this tester is also disclosed which may be operated manually by a diver or automatically by a deep water submersible.

In operation the precision electrical switch completes a circuit between a plug or probe entered into the socket on the nut and the body of the nut. The switch is triggered when the force on the nut compresses the nut sufficiently to move the switch to just contact a datum rod set at a preset distance from the switch. The preset distance corresponds to the desired minimum compressive load in the nut. The operation of the switch causes connected equipment plugged into the switch to operate. It will be seen this provides several new and original control options which are of advantage for the safe operating of the fastener.

It is an advantageous feature of an exemplary embodiments of the invention that the preset minimum safe strain value in the nut and the making of a circuit are linked so the switch not only senses when the preset load is reached but simultaneously controls other external systems which can be wrenches, tensioners, indicators, data storage systems, transmitters to send information about the nut load conditions to remote computers, etc.

A further important feature leading to great accuracy of strain measurement is that the datum rod does not move or carry any loading, so it remains totally stable. The switch is the only part that moves, moving towards the fixed datum rod as the nut compresses.

In a further embodiment, the switch may have two or more switching points which operate at different loads so allowing the nut to switch at two different loads in the nut. Typically this option is used to provide a minimum and maximum load measure to assist in the tightening procedure. However it may also have a totally different use. In some applications the minimum load setting can be set very low, for example at just 50% of the safe minimum load. In this case if the minimum setting were to be triggered and it was the only nut in a group so triggered it may indicate a failure such as a cracked bolt. A monitoring station may immediately be warned of not just relaxation but of a possible cracked bolt requiring emergency attention.

Note that the datum pin and the switch may be located inside a hole in the body of the nut which is completely sealed and can be pre-filled with fluid at initial assembly to prevent corrosion and dampen out any vibration. This creates reliability and avoids fragile measuring parts on the outside of the fastener where they will easily corrode and be damaged.

The condition of the switch may be signalled via an electrical socket mounted in the top surface of the switch. A signal from the switch can activate a variety of equipment. It can also provide a record of the ongoing nut condition if the signal is stored over time. An advantageous feature of this system is a plug socket in the switch which can take a variety of different plug-in options.

The external system of an embodiment uses a hand held indicator tool which can show when the switch is made. The tool is manually held in the socket and typically an LED lights up in the tool when the switch is made. The operator can check regularly and stop tightening the nut when minimum safe load is reached. For subsea work the hand held waterproof version of the indicator tool may be used.

A further option is to plugin a flashing warning light module into the socket. This can typically be held by a magnet on the end of the nut leaving hands free. This will flash while the nut is at a safe load and is an option to holding a manual tester to the nut.

A further option is to plug in a removable wifi transmitter into the switch unit to signal a switch condition which can be used where access with the hand tool indicator is difficult such as when using a hydraulic tensioner tool.

A further embodiment relates to plug in a Bluetooth transmitter into the socket which can then control the tightening process of a hydraulic torque wrench. The transmitter signals to a receiver on the wrench when the nut has reached its safe load telling it to stop tightening. Alternatively, when knowing the nut load at a given torque, then the applied torque may be automatically adjusted up or down to allow for the thread friction. Note the thread friction is automatically known once the torque at the nut's set load is known.

An advantageous embodiment of the invention is that groups of nuts can be electrically hard wire linked together in a chain, which can then be linked by wifi or hard wire to a transmitter. The single transmitter can then send data concerning all the nuts in a group via this single transmitter to a remote monitoring station. The wire links designed to connect the nuts are arranged so that it is clear which nuts have fallen below the minimum safe load, if any have. This is a very simple, reliable and low cost way to monitor safety of large groups of nuts such as are common in wind turbines.

The reliability of bolt load monitoring devices is of critical importance. The fact that this nut does not require batteries or electronic components, and has a mechanism totally protected inside the nut means it can offer the unprecedented level of practical safety which is advantageous for critical fasteners.

In an exemplary embodiment, an electrical switch may be set inside the body of nut safe from physical or environmental damage. In an embodiment, a minimum preload warning may be issued. In an embodiment, minimum and/or maximum preload monitoring may be made possible. An embodiment may provide a fluid filled chamber. In an embodiment, it may be possible to group nuts together with hardwire or wifi linkage. According to an embodiment, it may be possible to control torque wrench tightening. According to another embodiment, it may be possible to control hydraulic tensioner tightening. A manual preload check may be made. In an embodiment, a subsea preload check may be made. Analysis of data may be done in an embodiment.

### DESCRIPTION OF THE DRAWINGS

The invention will now be described solely by way of example and with reference to the accompanying drawings but to which the invention is not limited:
FIG. 1 illustrates a plan view of a female fastener configured as a nut according to a first embodiment.
FIG. 2 illustrates a section of the nut according to the first embodiment.
FIG. 3 illustrates a detailed section of a switch unit of the female fastener according to the first embodiment.
FIG. 4 illustrates a detailed section of a switch unit of a female fastener according to a second embodiment.
FIG. 5 shows an arrangement according to an exemplary embodiment linking multiple female fastener embodied as nuts together and illustrates connection by a wifi transmitter for remote monitoring.
FIG. 6 illustrates a section of a nut-type female fastener according to an exemplary embodiment with wifi plug-in.
FIG. 7 illustrates a plan view of a nut-type female fastener with wifi plug-in in use with a hydraulic torque wrench according to an exemplary embodiment.
FIG. 8 shows a side view of an external system in form of a hand held test unit in use with a nut-type female fastener according to an exemplary embodiment.
FIG. 9 shows a side view of a sub-sea embodiment of an external system embodied as hand held test unit cooperating with a female fastener.
FIG. 10 shows a side view of a warning light fitted near to a female fastener embodied as nut according to an exemplary embodiment .
FIG. 11 illustrates in detail a switch unit and a corresponding female fastener according to an exemplary embodiment.

### DESCRIPTION OF THE PREFERRED EMBODIMENTS

The illustrations in the drawings are schematical. In different drawings, similar or identical elements are provided with the same reference signs.

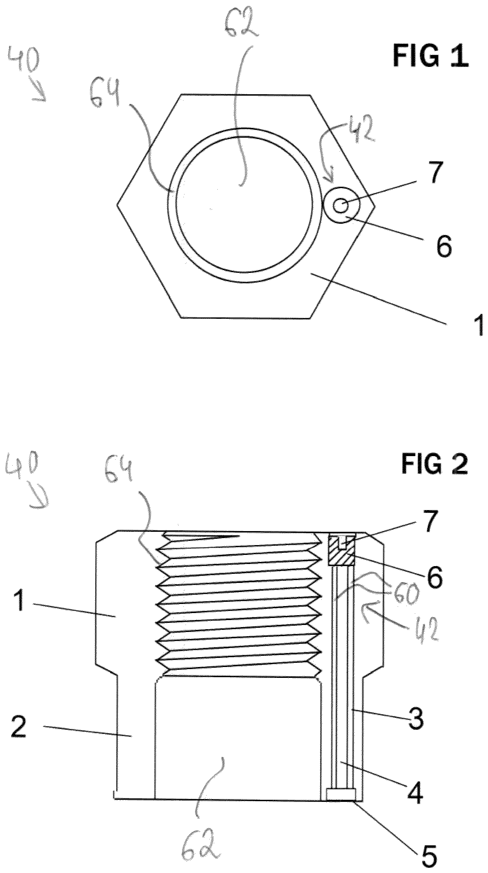

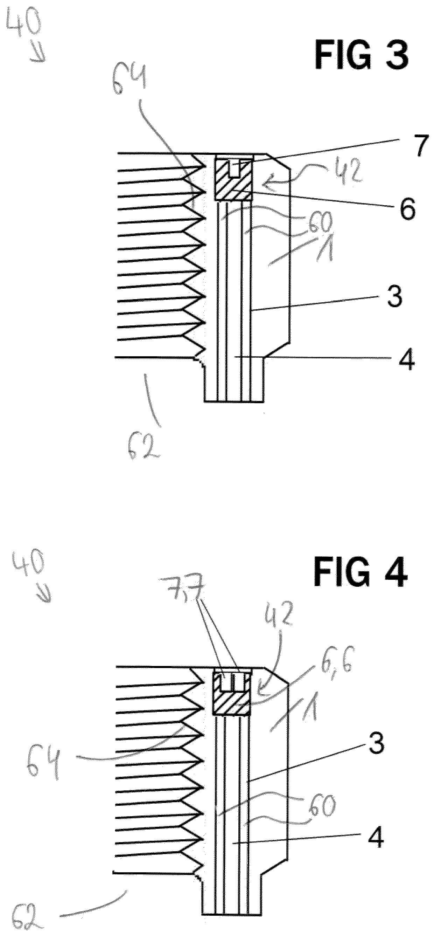

FIGS. 1 to 3 show a first embodiment of a nut-type female fastener 40 in different views. FIG. 1 shows a top view, FIG. 2 shows a cross-sectional view, and FIG. 3 shows a detail of the female fastener 40.

The illustrated female fastener 40 is configured as a nut for receiving and engaging with a male fastener having an external thread, which is not shown and which can be embodied for example is a threaded bolt or as a screw. The female fastener 40 comprising a threaded body 1, which can be an annular body with a through hole 62 and an internal thread 64.

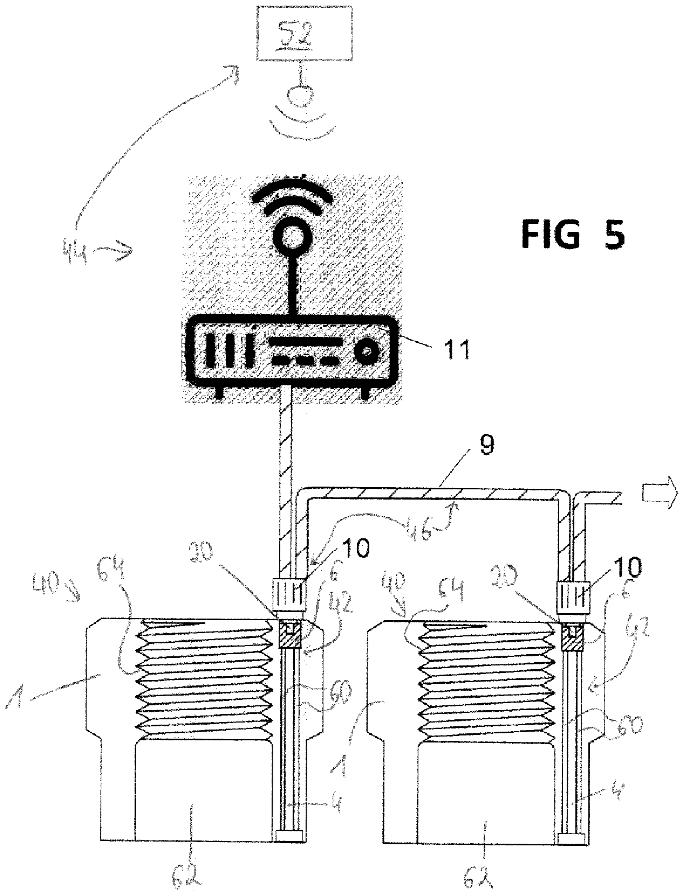

A load measuring device 42 for measuring compressive load exerted to the female fastener 40 due to its connection with the male fastener is disposed in a hole 3 formed in the threaded body 1. The load measuring device 42 is sealed and contained inside the threaded body 1 for measuring compressive load on the female fastener 40 and for communicating an electric signal representing said measured compressive load to an external system (see reference sign 44 in FIG. 5 to FIG. 10).

More specifically, the load measuring device 42 comprises an electrical switch 6 which is configured to change its switching condition (in particular between on and off) when the measured compressive load falls below a preset minimum compressive load level. An internal sealed chamber 60 of the female fastener 40 contains the load measuring device 42 and contains a fluid, such as oil, configured to protect said load measuring device 42 from environmental damage such as corrosion and vibration. In view of its sealed configuration, the female fastener 40 is waterproof and can thus be implemented for example in an offshore wind turbine. It may even be possible that the female fastener 40 is configured for subsea operation, for instance can withstand a hydrostatic pressure at subsea level.

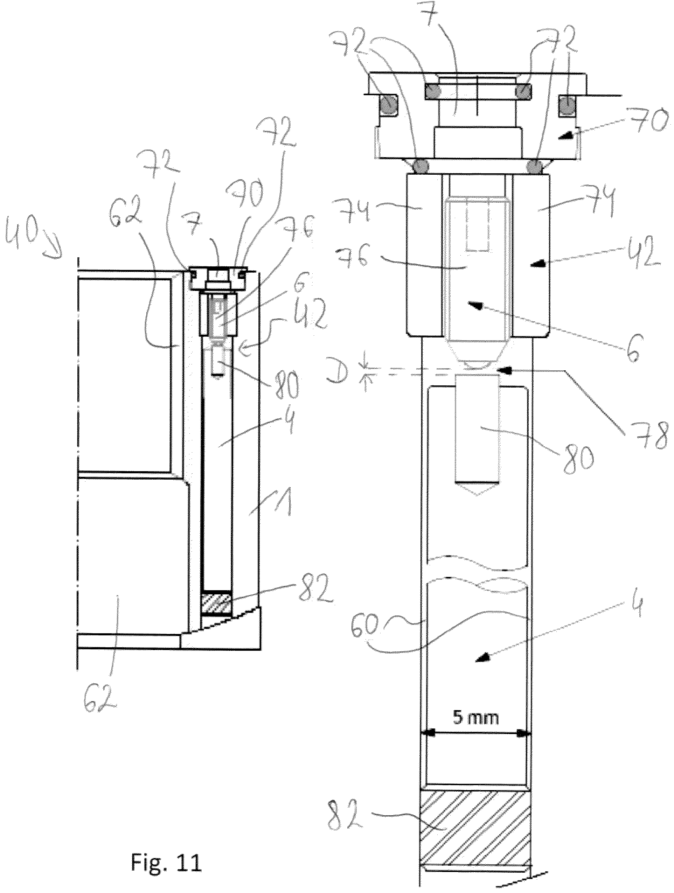

The load measuring device 42 may be configured to indicate by said electric signal when the own preload of the female fastener 40 falls below a preset safe minimum load. More specifically, the load measuring device 42 comprises the above-mentioned switch 6 which is triggered to change its switching condition when the compressive load on the female fastener 40 compresses the female fastener 40 sufficiently to move the switch 6 to contact a stationary rod 4 in the threaded body 1. Said rod 4 may be set at a preset distance (see distance D in FIG. 11) from the switch 6 in the absence of compressive load. In the presence of compressive load of an extent which may be for instance at least a preset minimum compressive load level, the distance D is reduced to zero so that the switch 6 and the rod 4 are brought in direct physical contact with each other.

Furthermore, the female fastener 40 comprises a recess-type socket 7 for accommodating an inserted probe (see reference sign 20 in FIGS. 5, 6, 8-10) of the external system 44. Advantageously, said inserting may establish a connection between the probe 20 and the switch 6 which may trigger communication of said electrical signal representing said measured compressive load to said external system 44.

Further advantageously, the illustrated female fastener 40 may be free of an energy supply unit, for instance may not need an own battery. The female fastener 40 can be powered by a battery or any other energy supply unit of the external system 44, when its probe 20 is inserted into the socket 7 of the female fastener 40. This simplifies the design and maintenance effort of female fastener 40.

Still referring to FIG. 1 to FIG. 3, the nut body 1 is shown as a typical threaded hexagon nut. More generally, the nut may be any threaded female fastener and may take other shapes for example round, square, bi-hexagonal. The nut has an extending annular collar 2 which both increases the strength and compressed length of the nut. A hole 3 (which may be a single through or a blind hole extending along a screwing axis of the nut-type female fastener 40) is formed through the nut. A datum rod 4 passes through the hole 3 and is fixed immovably at its lower end 5 in the nut. Above at a preset gap and adjacent to the datum rod 4 is electrical switch 6 which is mounted immovably in the hole 3. Both the switch 6 and the rod 4 extend along a screwing axis of the nut-type female fastener 40 (which is a vertical axis in the illustration of FIGS. 2 and 3). A socket 7 for a connection by a connector plug is located in the top of the switch 6. Through this socket 7, when the safe preset load is reached, a current flows indicating that the nut has above a minimum safe load.

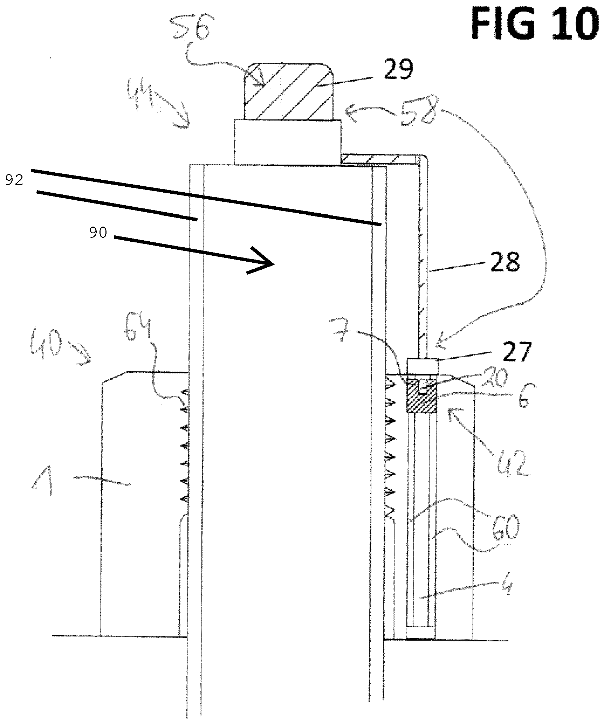

FIG. 4 shows a detail of a female fastener 40 according to a further embodiment of the invention. In this embodiment there are two plug sockets 7, 7 which allow for two connections indicating presence of a minimum or maximum load in the nut. This is achieved by having two sets of contacts in the switch body set for slightly different loads. For example, two electrical switches 6, 6 with different distances, D (see FIG. 10), may be formed in the load measuring device 42. Thus, the load measuring device 42 according to FIG. 4 comprises two electrical switches 6, 6 and two corresponding sockets 7, 7. The switches 6, 6 are configured to change their switching conditions at different preset compressive load levels. One of said switching conditions may correspond to a minimum load measure and the other of said switching conditions may correspond to a maximum load measure. This may provide a user with assistance in a tightening procedure. Different load measures associated with different pairs of switches 6 and sockets 7 may be defined by different distances (see "D" in FIG. 11) for each pair.

FIG. 5 shows an arrangement comprising a plurality of female fasteners 40 and an external system 44 receiving from the female fasteners 40 an electrical signal representing a measured compressive load applied to each of the female fasteners 40. More precisely, the arrangement of FIG. 5 shows a group of female fasteners 40 embodied as nuts and linked together by hardwire wire 9 and simple plugs 10, connecting together any number of nuts in a group. The condition of the whole group is sent by wireless transmitter 11, or by hard wire, to a remote monitoring station 52. The wiring circuit is so designed that if any of the nuts falls below the minimum required load then the identity of the specific unit can be displayed remotely or locally on the nut itself.

Thus, FIG. 5 illustrates that the external system 44 may comprise a remote monitoring station 52 which may be configured for analyzing the communicated signal representing said measured compressive load. Furthermore, said remote monitoring station 52 may be programmed for taking a predefined action when the measured compressive load falls below a preset minimum compressive load level. For example, such an action may be the output of a warning of loss of preload.

Advantageously, the part of the external system 44 in form of remote monitoring station 52 may be located at a remote position in relation to the female fasteners 40 and the transmitter 11. For instance, the female fasteners 40 and the transmitter 11 may be attached to one or more blades of a wind turbine (not shown), whereas the remote monitoring station 52 may be arranged apart from the blades of the wind turbine, for instance in a control room.

The arrangement according to FIG. 5 comprises a plurality of female fasteners 40 linked with each other by a linking unit 46. This may make it possible to communicate a signal representing a measured compressive load for each of the plurality of female fasteners 40 to the external system 44. For this purpose, the external system 44 comprises the wireless transmitter 11 which may be inserted into a socket 7 of one of the female fasteners 40 and which may be configured to wirelessly signal a switching condition of a switch 6 of the load measuring devices 42 to the remote monitoring station 52. The above-mentioned linking unit 46 may be configured for communicatively linking in a wired manner the various female fasteners 40 with each other. For example, the wireless transmitter 11 may be a wifi transmitter and/or a Bluetooth transmitter. As described, the arrangement of FIG. 5 particularly suitable for use in a wind turbine, for example in an offshore wind turbine.

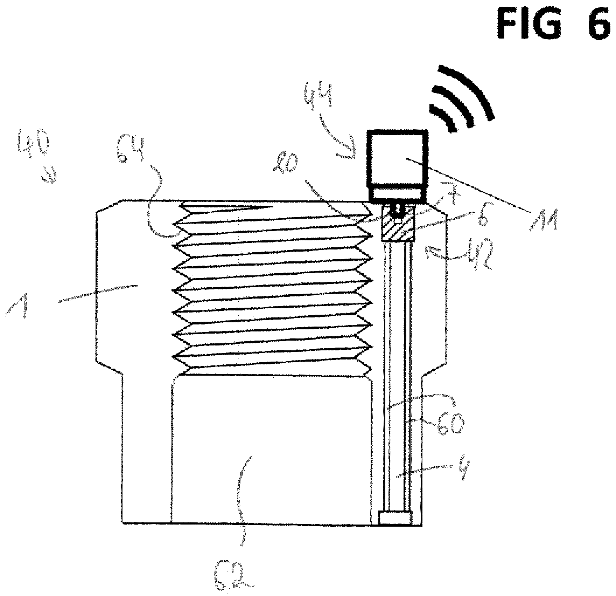

FIG. 6 shows an arrangement comprising a female fastener 40 and an external system 44 receiving from the female fastener 40 a signal representing a measured compressive load applied to the female fastener 40 when being coupled with the female fastener 40. Thus, FIG. 6 shows a further embodiment where a plug-in, removable wifi or Bluetooth unit in form of a transmitter 11 will transmit a signal warning that the load in the nut has fallen below a preset minimum. This may be of particular use where the nut is on a moving structure such as a wind turbine blade.

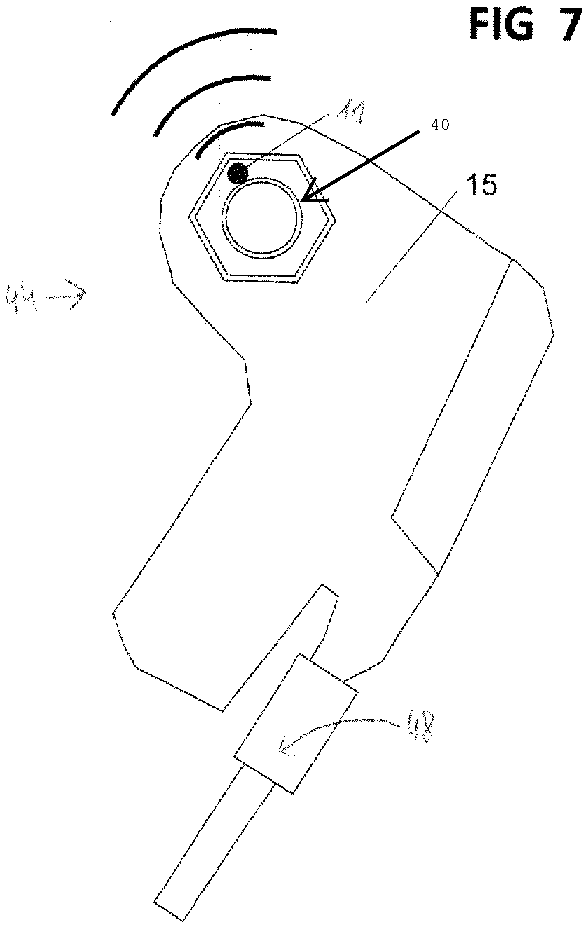

FIG. 7 shows an arrangement comprising an external system 44 and a female fastener 40 according to another exemplary embodiment. FIG. 7 illustrates a further important way this minimum load indication signal may be used. The signal may be used to control the initial tightening process of the nut-type female fastener 40. In this example a hydraulic torque wrench 15 is being used to tighten the nut with a plug in Bluetooth transmitter 11. When the nut reaches its preset load then it will send a signal to the torque wrench 15 telling it to stop tightening. A unique feature is that when nut reaches its preset load the torque reading on the torque wrench 15 can be noted and used to calculate automatically the true friction on the threads. This true friction factor can then be used to add a precise extra tightening if required. For example by this method an accurate extra 10% load (or another predefined value) above the nut set load can be added to allow for some relaxation in the joint before the nut signals a low, unsafe load. Generally when the thread friction is found by this method any load alternative to the preset load may be accurately applied to the nut by a torque wrench.

According to FIG. 7, the external system 44 hence comprises a tightening tool 48 embodied as a torque wrench 15. The latter is configured to compare a communicated compression load-indicating signal from the transmitter 11 assembled on the female fastener 40 representing said measured compressive load to torque being applied by the tightening tool 48 to the female fastener 40 to achieve that compressive load, and to adjust the applied torque based on a result of said comparing.

In another embodiment, the tightening tool 48 may be a hydraulic tensioner (not shown) applying said compressive load and being configured so that, if the compressive load communicated to the tightening tool 48 by the signal deviates from a target load level, the tightening tool 48 adjusts the applied compressive load towards the target load level.

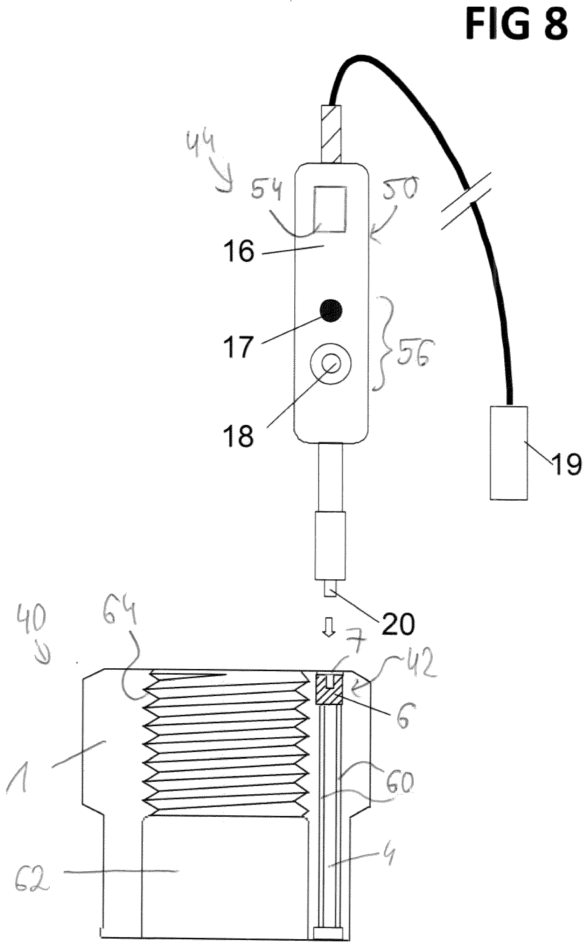

FIG. 8 illustrates an arrangement comprising a female fastener 40 and an external system 44 according to yet another exemplary embodiment. More specifically, FIG. 8 shows a method of checking the bolt load using a simple hand held tester. This simple device is portable and instantly usable to check any nut. The body 16 contains a battery or any other supply unit 54 and an LED 17 and audio alarm 18. An earth connection 19 is magnetic and may be connected either to the nut itself or to anywhere conductive on the flange. The probe 20 is entered into the nut socket 7 and the LED flashes and the buzzer sounds if there is a load above the minimum acceptable preset.

More generally, a load measuring device 42 of the female fastener 40 comprises an electrical switch 6 which is configured to complete a circuit between, on the one hand, a probe 20 of the external system 44 when entered into a socket 7 on the female fastener 40 and, on the other hand, a further contact of the female fastener 40. The external system 44 is here equipped with a hand held tool 50 being manually connectable to the load measuring device 42 for outputting, for example visually by LED 17 and/or acoustically by audio alarm 18, information indicative of the measured compressive load.

Thus, the external system 44 illustrated in FIG. 8 comprises an energy supply unit 54 in form of a battery which is configured for powering the load measuring device 42 when the female fastener 40 is coupled with the external system 44. Advantageously, the female fastener 40 does not require any own energy supply unit, which simplifies its construction and renders female fastener 40 maintenance-free.

Moreover, the external system 44 according to FIG. 8 comprises an indicator 56 indicating a predefined condition of the measured compressive load. In FIG. 8, indicator 56 is embodied as the light-emitting diode 17 (lighting up when switch 6 of the load measuring device 42 changes a switching condition) and by audio alarm 18 (outputting an audio signal when switch 6 of the load measuring device 42 changes a switching condition).

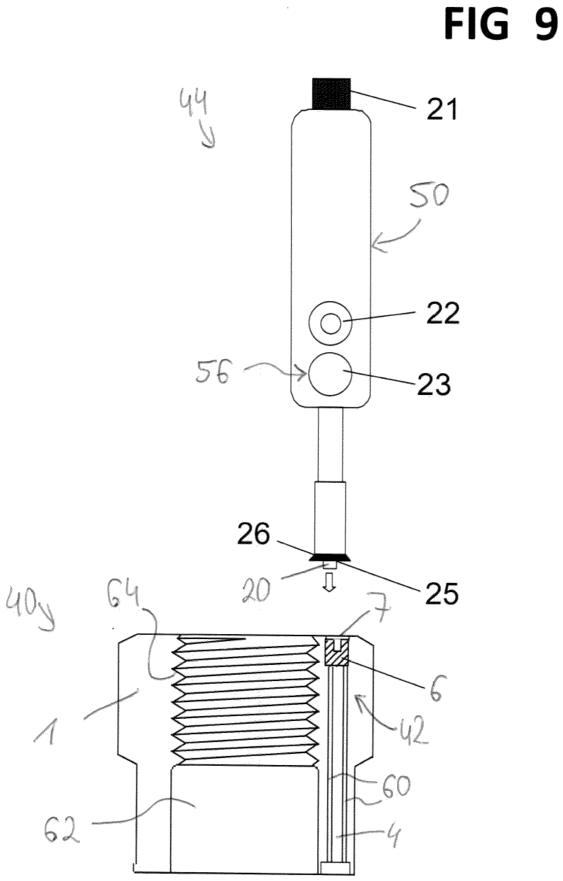

In the embodiment of the arrangement according to FIG. 9, a hand held tool 50, which may be embodied in a similar way as according to FIG. 8, is configured for subsea operation. FIG. 9 shows a special version of the handheld tester for use in subsea applications. As seawater is a good conductor there is no need for the earth terminal 19 shown in FIG. 8. This terminal is replaced by a metal boss 21 which conducts current through the seawater to the nut so completing the circuit to operate the LED 23. A waterproof push button 22 switches the unit on when the probe 20, which can be embodied as probe point 25 in FIG. 9, is properly located in the nut with a watertight seal 26.

FIG. 10 shows an arrangement of female fastener 40 and external system 44 according to yet another exemplary embodiment. In this embodiment, the external system 44 comprises a flashing warning light module 58 to be inserted into a socket 7 of the female fastener 40. The flashing warning light module 58 is configured to flash while the female fastener 40 is at a safe load as indicated by said signal.

More specifically, FIG. 10 shows a warning light 29 connected to the nut socket 7 by an electrical cable 28 and a removable plug 27, which may form a probe 20. The warning light may be mounted for instance by magnets on the end of a bolt (as male fastener 90 with external thread 92) or on a tightening wrench or hydraulic tensioner (not shown in FIG. 10) being used in the assembly process. When a minimum load is achieved in the nut then the light flashes. This is a particularly useful device with hydraulic tensioners as the stud and the bolt may well be totally inaccessible at the end being tightened so this device may be fitted at the other end of the stud where it can warn if the final assembly load is too low.

When any of the above tightening control methods have been used it is a simple procedure to then connect hardwire linkages for long term remote monitoring as shown in FIG. 5.

FIG. 11 illustrates a switch 6 and a corresponding female fastener 40 according to an exemplary embodiment. On the left-hand side of FIG. 11, a portion of the female fastener 40 is shown. On the right-hand side, a detail of female fastener 40 is illustrated showing construction of load measuring device 42 with switch 6 in further detail.

Also according to FIG. 11, the illustrated female fastener 40 is configured for receiving and engaging with a (not shown) threaded male fastener. The female fastener 40 comprises a threaded body 1 which may be made of any metallic material (such as steel). A load measuring device 42 is disposed sealed and contained inside the threaded body 1. The load measuring device 42 serves for measuring compressive load on the female fastener 40 and for communicating a signal representing said measured compressive load to an external system 44 (not shown in FIG. 11). Advantageously, the load measuring device 42 comprises a switch 6 which is triggered to change its switching condition when the compressive load on the female fastener 40 compresses the female fastener 40 sufficiently to move the switch 6 to contact a rod 4 in the threaded body 1. The rod 4 is set at a preset distance D from the switch 6 in the absence of compressive load. The distance D may be for example in a range from 10 µm to 100 µm, for instance from 40 µm to 50 µm. By adjusting the distance D, it may be possible to preset the minimum compressive load level at which the switch 6 switches.

In the following, construction of the load measuring device 42 with electric switch 6 according to FIG. 11 will be described in further detail.

A protection cap 70 of the load measuring device 42 may include a socket 7 for inserting a probe 20 (not shown in FIG. 11). For instance, protection cap 70 may be made of a plastic material such as PEEK (Polyetheretherketone). Socket 7 may be adapted for cooperation with a connector or for manual testing. Advantageously, protection cap 70 inserted into the nut body 1 may protrude beyond the upper main surface of the nut body 1, for instance by 0.5 mm. This may have a positive impact on the sealing performance of the female fastener 40. Moreover, sealing of the load measuring device 42 may be further promoted by one or more sealing rings 72, for instance assembled at protection cap 70.

Below protection cap 70, an annular insert 74 may be arranged. Insert 74 may be made of plastic material, such as PEEK. Furthermore, insert 74 may have an interior thread. For example, insert 74 may be press fit and riveted in place in hole 3 of the nut body 1.

A plunger 76 (for example a spring plunger) of switch 6 may be assembled in the hole of the insert 74. For instance, plunger 76 may be made of stainless steel, so that it will not be damaged by seawater. For example, plunger 76 may be locked and sealed in the hole of threaded insert 74.

A gap 78 with distance D is set (for instance preset during manufacture) between the bottom of plunger 76 and the top of a contact 80 of rod 4. In the absence of compressive load acting on female fastener 40, the distance D will be maintained. In the presence of compressive load acting on female fastener 40, the distance D will be reduced and will then become zero when a preset minimum compressive load level is reached. Thus, the size of the gap 78 sets the switching load at which switch 6 switches. Furthermore, gap 78 may be oil-filled for suppressing corrosion and vibration.

The rod 4 with its contact 80 may be mounted at a fixed position in hole 3 of female fastener 40, and switch 6 may be mounted at a preset position in hole 3, where said position is set during manufacture in accordance with a level of compressive load exerted to the female fastener 40.

The contact 80 may be made for example of tungsten carbide, which is very hard and is not prone to wear. Contact 80 may be fitted in a top of a main body of rod 4. Preferably, the material of rod 4 is the same as the material of the body 1, for example steel. This ensures that rod 4 and body 1 have the same coefficient of thermal expansion (CTE). Thus, when temperature changes, gap 78 and the corresponding distance D remain constant. Thus, no thermal mismatch occurs and the accuracy of the load measurement may be very high.

At the bottom side of the load measuring device 42, an optional spherical washer 82 may be provided.

It should be noted that the term "comprising" does not exclude other elements or steps and the "a" or "an" does not exclude a plurality. Also elements described in association with different embodiments may be combined.

It should also be noted that reference signs in the claims shall not be construed as limiting the scope of the claims.

Implementation of the invention is not limited to the preferred embodiments shown in the figures and described above. Instead, a multiplicity of variants are possible which use the solutions shown and the principle according to the invention even in the case of fundamentally different embodiments. The scope of the invention is set out in the appended claims.

## Claims

1. A female fastener (40) for receiving and engaging with a threaded male fastener, the female fastener (40) comprising:
a threaded body (1);
a load measuring device (42) having an electrical switch mechanism disposed completely sealed and contained inside the threaded body (1) for measuring compressive load on the female fastener (40) and for communicating a signal representing said measured compressive load to an external system (44).

2. The female fastener (40) according to claim 1, wherein the load measuring device (42) comprises an electrical switch (6) which is configured to change its switching condition when the measured compressive load falls below a preset minimum compressive load level.

3. The female fastener (40) according to claim 1 or 2, wherein the load measuring device (42) comprises at least two electrical switches (6, 6) configured to change their switching conditions at different preset compressive load levels.

4. The female fastener (40) according to any of claims 1 to 3, comprising an internal sealed chamber (60) containing the load measuring device (42) and containing a fluid, in particular a liquid, configured to protect said load measuring device (42) from environmental damage, in particular from corrosion and/or vibration.

5. The female fastener (40) according to any of claims 1 to 4, comprising at least one of the following features:
a linking unit (46) for communicatively linking, in particular for wired or wireless linking, the female fastener (40) with at least one further female fastener (40);
the female fastener (40) is configured as a nut;
the female fastener (40) is configured waterproof, in particular configured for subsea operation;
the female fastener (40) is configured to indicate by said signal when the own preload of the female fastener (40) falls below a preset safe minimum load.

6. The female fastener (40) according to any of claims 1 to 5, wherein the load measuring device (42) comprises at least one switch (6) which is triggered to change its switching condition when the compressive load on the female fastener (40) compresses the female fastener (40) sufficiently to move the switch (6) to contact a rod (4) in the threaded body (1), which rod (4) is set at a preset distance (D) from the switch (6) in the absence of compressive load.

7. The female fastener (40) according to any of claims 1 to 6, comprising a socket (7) for inserting a probe (20) of the external system (44), wherein said inserting triggers communication of said signal representing said measured compressive load to said external system (44).

8. The female fastener (40) according to any of claims 1 to 7, being free of an energy supply unit, in particular being free of a battery.

9. An arrangement, comprising:
a female fastener (40) according to any of claims 1 to 8; and
the external system (44) receiving said signal when being coupled with the female fastener (40).

10. The arrangement according to claim 9, wherein the external system (44) comprises a tightening tool (48), in particular a torque wrench, configured to compare the communicated signal representing said measured compressive load to torque being applied by the tightening tool (48) to the female fastener (40) to achieve that compressive load, and to adjust the applied torque based on a result of said comparing.

11. The arrangement according to claim 9 or 10, wherein the external system (44) comprises a tightening tool (48), in particular a hydraulic tensioner, applying said compressive load and being configured so that, if the compressive load communicated to the tightening tool (48) by the signal deviates from a target compressive load level, the tightening tool (48) adjusts the applied compressive load towards the target compressive load level.

12. The arrangement according to any of claims 9 to 11, wherein the external system (44) comprises a hand held tool (50) being manually connectable to the load measuring device (42) for outputting, for example visually and/or acoustically, information indicative of the measured compressive load, wherein the hand held tool (50) is preferably configured for subsea operation.

13. The arrangement according to any of claims 9 to 12, wherein the external system (44) comprises a remote monitoring station (52) configured for analyzing the communicated signal representing said measured compressive load and for taking an action, in particular outputting a warning of loss of preload, when the measured compressive load falls below a preset minimum compressive load level.

14. The arrangement according to any of claims 9 to 13, comprising at least one of the following features:
wherein at least part of the external system (44) is located at a remote position in relation to the female fastener (40);
the arrangement comprises at least one further female fastener (40) according to any of claims 1 to 8, wherein said female fastener (40) and said at least one further female fastener (40) are linked for communicating a signal representing said measured compressive load of said female fastener (40) and of said at least one further female fastener (40) to the external system (44);
wherein said load measuring device (42) comprises an electrical switch (6) which is configured to complete a circuit between, on the one hand, a probe (20) of the external system (44) when inserted into a socket (7) on the female fastener (40) and, on the other hand, a further contact of the female fastener (40);
wherein the external system (44) comprises an energy supply unit (54), in particular a battery, configured for powering the load measuring device (42) when the female fastener (40) is coupled with the external system (44);
wherein the external system (44) comprises an indicator (56) indicating a predefined condition of the measured compressive load, in particular a light-emitting diode (17) lighting up when a switch (6) of the load measuring device (42) changes a switching condition;
wherein the external system (44) comprises a flashing warning light module (58) to be inserted into a socket (7) of the female fastener (40) and configured to flash while the female fastener (40) is at a safe load as indicated by said signal;
wherein the external system (44) comprises a wireless transmitter (11), for example a wifi transmitter and/or a Bluetooth transmitter, to be inserted into a socket (7) of the female fastener (40) and configured to wirelessly signal a switching condition of a switch (6) of the load measuring device (42).

15. A method of using a female fastener (40) according to any of claims 1 to 8 or an arrangement according to any of claims 9 to 14 in a wind turbine, for example in an offshore wind turbine.

## Patentansprüche

1. Ein weibliches Befestigungsmittel (40) zum Aufnehmen und in Eingriff nehmen eines männlichen Gewindebefestigungsmittels, wobei das weibliche Befestigungsmittel (40) aufweist:
einen Gewindekörper (1);
eine Lastmessvorrichtung (42), die einen elektrischen Schaltmechanismus hat, der vollständig abgedichtet und innerhalb des Gewindekörpers (1) angeordnet ist, zum Messen einer Drucklast auf das weibliche Befestigungsmittel (40) und zum Übermitteln eines Signals, das die gemessene Drucklast repräsentiert, an ein externes System (44).

2. Das weibliche Befestigungsmittel (40) gemäß Anspruch 1, wobei die Lastmessvorrichtung (42) einen elektrischen Schalter (6) aufweist, der konfiguriert ist, um seinen Schaltzustand zu ändern, wenn die gemessene Drucklast unter ein voreingestelltes minimales Drucklastniveau fällt.

3. Das weibliche Befestigungsmittel (40) gemäß Anspruch 1 oder 2, wobei die Lastmessvorrichtung (42) zumindest zwei elektrische Schalter (6, 6) aufweist, die konfiguriert sind, um ihre Schaltzustände bei unterschiedlichen voreingestellten Drucklastniveaus zu ändern.

4. Das weibliche Befestigungsmittel (40) gemäß einem der Ansprüche 1 bis 3, aufweisend eine innere abgedichtete Kammer (60), die die Lastmessvorrichtung (42) enthält und ein Fluid, insbesondere eine Flüssigkeit, enthält, die konfiguriert ist, um die Lastmessvorrichtung (42) vor Umweltschäden, insbesondere vor Korrosion und/oder Vibration, zu schützen.

5. Das weibliche Befestigungsmittel (40) gemäß einem der Ansprüche 1 bis 4, aufweisend zumindest eines der folgenden Merkmale:
eine Verbindungseinheit (46) zum kommunikativen Verbinden, insbesondere zum drahtgebundenen oder drahtlosen Verbinden, des weiblichen Befestigungsmittels (40) mit zumindest einem weiteren weiblichen Befestigungsmittel (40);
das weibliche Befestigungsmittel (40) ist als eine Mutter konfiguriert;
das weibliche Befestigungsmittel (40) ist wasserdicht konfiguriert, insbesondere für einen Unterwasserbetrieb konfiguriert;
das weibliche Befestigungsmittel (40) ist konfiguriert, um durch das Signal anzuzeigen, wenn die eigene Vorlast des weiblichen Befestigungsmittels (40) unter eine voreingestellte sichere minimale Last fällt.

6. Das weibliche Befestigungsmittel (40) gemäß einem der Ansprüche 1 bis 5, wobei die Lastmessvorrichtung (42) zumindest einen Schalter (6) aufweist, der ausgelöst wird, um seinen Schaltzustand zu ändern, wenn die Drucklast auf das weibliche Befestigungsmittel (40) das weibliche Befestigungsmittel (40) ausreichend komprimiert, um den Schalter (6) zu bewegen, um eine Stange (4) in dem Gewindekörper (1) zu kontaktieren, welche Stange (4) in einem voreingestellten Abstand (D) von dem Schalter (6) in Abwesenheit einer Drucklast eingestellt ist.

7. Das weibliche Befestigungsmittel (40) gemäß einem der Ansprüche 1 bis 6, aufweisend eine Buchse (7) zum Einführen einer Sonde (20) des externen Systems (44), wobei das Einführen eine Übermittlung des Signals, das die gemessene Drucklast repräsentiert, an das externe System (44) auslöst.

8. Das weibliche Befestigungsmittel (40) gemäß einem der Ansprüche 1 bis 7, das frei von einer Energieversorgungseinheit ist, insbesondere frei von einer Batterie ist.

9. Eine Anordnung, aufweisend:
ein weibliches Befestigungsmittel (40) gemäß einem der Ansprüche 1 bis 8; und
wobei das externe System (44) das Signal empfängt, wenn es mit dem weiblichen Befestigungsmittel (40) gekoppelt ist.

10. Die Anordnung gemäß Anspruch 9, wobei das externe System (44) ein Anziehwerkzeug (48), insbesondere einen Drehmomentschlüssel, aufweist, der konfiguriert ist, um das übermittelte Signal, das die gemessene Drucklast repräsentiert, mit einem Drehmoment zu vergleichen, das durch das Anziehwerkzeug (48) auf das weibliche Befestigungsmittel (40) ausgeübt wird, um diese Drucklast zu erreichen, und um das ausgeübte Drehmoment basierend auf einem Ergebnis des Vergleichens einzustellen.

11. Die Anordnung gemäß Anspruch 9 oder 10, wobei das externe System (44) ein Anziehwerkzeug (48), insbesondere einen hydraulischen Spanner, aufweist, das die Drucklast ausübt und so konfiguriert ist, dass, wenn die Drucklast, die durch das Signal an das Anziehwerkzeug (48) übermittelt wird, von einem Zieldrucklastniveau abweicht, das Anziehwerkzeug (48) die ausgeübte Drucklast in Richtung des Zieldrucklastniveaus einstellt.

12. Die Anordnung gemäß einem der Ansprüche 9 bis 11, wobei das externe System (44) ein Handheld-Werkzeug (50) aufweist, das manuell mit der Lastmessvorrichtung (42) verbindbar ist, um, beispielsweise visuell und/oder akustisch, Informationen auszugeben, die indikativ für die gemessene Drucklast sind, wobei das Handheld-Werkzeug (50) vorzugsweise für einen Unterwasserbetrieb konfiguriert ist.

13. Die Anordnung gemäß einem der Ansprüche 9 bis 12, wobei das externe System (44) eine entfernte Überwachungsstation (52) aufweist, die konfiguriert ist zum Analysieren des übermittelten Signals, das die gemessene Drucklast repräsentiert, und zum Ergreifen einer Aktion, insbesondere zum Ausgeben einer Warnung vor einem Verlust der Vorlast, wenn die gemessene Drucklast unter ein voreingestelltes minimales Drucklastniveau fällt.

14. Die Anordnung gemäß einem der Ansprüche 9 bis 13, aufweisend zumindest eines der folgenden Merkmale:
wobei zumindest ein Teil des externen Systems (44) an einer entfernten Position in Bezug auf das weibliche Befestigungsmittel (40) angeordnet ist;
die Anordnung weist zumindest ein weiteres weibliches Befestigungsmittel (40) gemäß einem der Ansprüche 1 bis 8 auf, wobei das weibliche Befestigungsmittel (40) und das zumindest eine weitere weibliche Befestigungsmittel (40) verbunden sind zum Übermitteln eines Signals, das die gemessene Drucklast des weiblichen Befestigungsmittels (40) und des zumindest einen weiteren weiblichen Befestigungsmittels (40) repräsentiert, an das externe System (44);
wobei die Lastmessvorrichtung (42) einen elektrischen Schalter (6) aufweist, der konfiguriert ist, um einen Schaltkreis zwischen einerseits einer Sonde (20) des externen Systems (44), wenn sie in eine Buchse (7) an dem weiblichen Befestigungsmittel (40) eingeführt ist, und andererseits einem weiteren Kontakt des weiblichen Befestigungsmittels (40) zu vervollständigen;
wobei das externe System (44) eine Energieversorgungseinheit (54), insbesondere eine Batterie, aufweist, die konfiguriert ist zum Versorgen der Lastmessvorrichtung (42) mit Energie, wenn das weibliche Befestigungsmittel (40) mit dem externen System (44) gekoppelt ist;
wobei das externe System (44) einen Indikator (56) aufweist, der einen vordefinierten Zustand der gemessenen Drucklast anzeigt, insbesondere eine Leuchtdiode (17), die aufleuchtet, wenn ein Schalter (6) der Lastmessvorrichtung (42) einen Schaltzustand ändert;
wobei das externe System (44) ein blinkendes Warnlichtmodul (58) aufweist, das in eine Buchse (7) des weiblichen Befestigungsmittels (40) einzuführen ist und konfiguriert ist, zu blinken, während das weibliche Befestigungsmittel (40) bei einer sicheren Last ist, wie durch das Signal angezeigt;
wobei das externe System (44) einen drahtlosen Sender (11), zum Beispiel einen WiFi-Sender und/oder einen Bluetooth-Sender, aufweist, der in eine Buchse (7) des weiblichen Befestigungsmittels (40) einzuführen ist und konfiguriert ist zum drahtlosen Signalisieren eines Schaltzustands eines Schalters (6) der Lastmessvorrichtung (42).

15. Ein Verfahren zum Verwenden eines weiblichen Befestigungsmittels (40) gemäß einem der Ansprüche 1 bis 8 oder einer Anordnung gemäß einem der Ansprüche 9 bis 14 in einer Windturbine, zum Beispiel in einer Offshore-Windturbine.

## Revendications

1. Élément de fixation femelle (40) destiné à recevoir et à s'engager avec un élément de fixation mâle fileté, l'élément de fixation femelle (40) comprenant
un corps fileté (1) ;
un dispositif de mesure de charge (42) comportant un mécanisme de commutation électrique disposé de manière entièrement étanche et contenu à l'intérieur du corps fileté (1), destiné à mesurer la charge de compression exercée sur l'élément de fixation femelle (40) et à transmettre un signal représentant ladite charge de compression mesurée à un système externe (44).

2. L'élément de fixation femelle (40) selon la revendication 1, dans lequel le dispositif de mesure de charge (42) comprend un interrupteur électrique (6) qui est configuré pour modifier son état de commutation lorsque la charge de compression mesurée tombe en dessous d'un niveau de charge de compression minimal prédéfini.

3. L'élément de fixation femelle (40) selon la revendication 1 ou 2, dans laquelle le dispositif de mesure de charge (42) comprend au moins deux interrupteurs électriques (6, 6) configurés pour modifier leurs états de commutation à différents niveaux de charge de compression prédéfinis.

4. L'élément de fixation femelle (40) selon l'une quelconque des revendications 1 à 3, comprenant une chambre interne étanche (60) contenant le dispositif de mesure de charge (42) et un fluide, en particulier un liquide, agencée pour protéger ledit dispositif de mesure de charge (42) contre les dommages environnementaux, en particulier contre la corrosion et/ou les vibrations.

5. L'élément de fixation femelle (40) selon l'une quelconque des revendications 1 à 4, comprenant au moins l'une des caractéristiques suivantes :
une unité de liaison (46) destinée à relier de manière communicative, en particulier par liaison filaire ou sans fil, la fixation femelle (40) à au moins une autre fixation femelle (40) ;
l'élément de fixation femelle (40) se présente sous la forme d'un écrou ;
l'élément de fixation femelle (40) est étanche, et est notamment conçu pour une utilisation sous-marine ;
l'élément de fixation femelle (40) est conçu pour signaler, par ledit signal, lorsque sa précontrainte propre tombe en dessous d'une charge minimale de sécurité prédéfinie.

6. L'élément de fixation femelle (40) selon l'une quelconque des revendications 1 à 5, dans lequel le dispositif de mesure de charge (42) comprend au moins un interrupteur (6) qui est déclenché pour changer d'état de commutation lorsque la charge de compression exercée sur l'élément de fixation femelle (40) comprime celui-ci suffisamment pour déplacer l'interrupteur (6) de manière à ce qu'il entre en contact avec une tige (4) dans le corps fileté (1), laquelle tige (4) est placée à une distance prédéfinie (D) de l'interrupteur (6) en l'absence de charge de compression.

7. L'élément de fixation femelle (40) selon l'une quelconque des revendications 1 à 6, comprenant une douille (7) destinée à l'insertion d'une sonde (20) du système externe (44), dans lequel ladite insertion déclenche la transmission dudit signal représentant ladite charge de compression mesurée vers ledit système externe (44).

8. L'élément de fixation femelle (40) selon l'une quelconque des revendications 1 à 7, dépourvue d'unité d'alimentation en énergie, en particulier dépourvue de batterie.

9. Dispositif, comprenant :
une fixation femelle (40) selon l'une quelconque des revendications 1 à 8 ; et
le système externe (44) recevant ledit signal lorsqu'il est accouplé à la fixation femelle (40).

10. Dispositif selon la revendication 9, dans lequel le système externe (44) comprend un outil de serrage (48), en particulier une clé dynamométrique, configuré pour comparer le signal transmis représentant ladite charge de compression mesurée au couple appliqué par l'outil de serrage (48) à la fixation femelle (40) afin d'atteindre cette charge de compression, et pour ajuster le couple appliqué en fonction du résultat de ladite comparaison.

11. Dispositif selon la revendication 9 ou 10, dans lequel le système externe (44) comprend un outil de serrage (48), en particulier un tendeur hydraulique, appliquant ladite charge de compression et étant configuré de telle sorte que, si la charge de compression communiquée à l'outil de serrage (48) par le signal s'écarte d'un niveau de charge de compression cible, l'outil de serrage (48) ajuste la charge de compression appliquée en direction du niveau de charge de compression cible.

12. Dispositif selon l'une quelconque des revendications 9 à 11, dans lequel le système externe (44) comprend un outil portatif manuel (50) pouvant être connecté manuellement au dispositif de mesure de charge (42) pour fournir, par exemple de manière visuelle et/ou acoustique, des informations indiquant la charge de compression mesurée, l'outil portatif (50) étant de préférence configuré pour un fonctionnement sous-marin.

13. Dispositif selon l'une quelconque des revendications 9 à 12, dans lequel le système externe (44) comprend une station de surveillance à distance (52) configurée pour analyser le signal transmis représentant ladite charge de compression mesurée et pour déclencher une action, en particulier émettre un avertissement de perte de précharge, lorsque la charge de compression mesurée tombe en dessous d'un niveau de charge de compression minimal prédéfini.

14. Dispositif selon l'une quelconque des revendications 9 à 13, comprenant au moins l'une des caractéristiques suivantes :
dans lequel au moins une partie du système externe (44) est située à distance de la fixation femelle (40) ;
le dispositif comprend au moins une autre fixation femelle (40) selon l'une quelconque des revendications 1 à 8, dans lequel ladite fixation femelle (40) et ladite au moins une autre fixation femelle (40) sont reliées pour transmettre au système externe (44) un signal représentant ladite charge de compression mesurée de ladite fixation femelle (40) et de ladite au moins une autre fixation femelle (40) ;
dans lequel ledit dispositif de mesure de charge (42) comprend un interrupteur électrique (6) qui est configuré pour fermer un circuit entre, d'une part, une sonde (20) du système externe (44) lorsqu'elle est insérée dans une prise (7) sur l' e élément de fixation femelle (40) et, d'autre part, un autre contact de l'élément de fixation femelle (40) ;
dans lequel le système externe (44) comprend une unité d'alimentation en énergie (54), en particulier une batterie, configurée pour alimenter le dispositif de mesure de charge (42) lorsque le connecteur femelle (40) est couplé au système externe (44) ;
dans lequel le système externe (44) comprend un indicateur (56) signalant un état prédéfini de la charge de compression mesurée, en particulier une diode électroluminescente (17) qui s'allume lorsqu'un commutateur (6) du dispositif de mesure de charge (42) change d'état ;
dans lequel le système externe (44) comprend un module de voyant d'avertissement clignotant (58) destiné à être inséré dans une prise (7) de la fixation femelle (40) et configuré pour clignoter tant que la fixation femelle (40) se trouve à une charge de sécurité telle qu'indiquée par ledit signal ;
dans lequel le système externe (44) comprend un émetteur sans fil (11), par exemple un émetteur Wi-Fi et/ou un émetteur Bluetooth, destiné à être inséré dans une prise (7) de la fixation femelle (40) et configuré pour signaler sans fil un état de commutation d'un interrupteur (6) du dispositif de mesure de charge (42).

15. Procédé d'utilisation d'une fixation femelle (40) selon l'une quelconque des revendications 1 à 8 ou d'un agencement selon l'une quelconque des revendications 9 à 14 dans une turbine éolienne, par exemple dans une turbine éolienne offshore.
